# EUROPÄISCHE PATENTANMELDUNG

(11) **EP 0 732 050 A1**
(43) Veröffentlichungstag der Anmeldung: **18.09.1996**
(21) Anmeldenummer: 96103731.4
(22) Anmeldetag: 09.03.1996
(51) Int. Cl.: A01K 1/12, A01K 1/00

(54) **Stallanlage für Milchkühe**

(30) Priorität: 13.03.1995 DE 19508595
(71) Anmelder: Kirchberger, Katrin, 96215 Lichtenfels (DE)
(72) Erfinder: Kirchberger, Katrin, 96215 Lichtenfels (DE)
(74) Vertreter: LOUIS, PÖHLAU, LOHRENTZ & SEGETH

(57) **Zusammenfassung**

Es wird eine Stallanlage (10) für Milchkühe beschrieben, die einen zentralen ortsfest vorgesehenen Melkplatz (12) aufweist. Den Melkplatz (12) umgeben ortsfest vorgesehene Liegeboxen (36, 38, 40), die vorzugsweise in einem konzentrischen Kreisringbereich (14) angeordnet sind. Radial außerhalb des Liegeboxen-Kreisringbereiches (14) kann eine kreisringförmige Futterausgabeeinrichtung (16) konzentrisch vorgesehen sein. Diese kann in ihrer Umfangsrichtung beweglich sein.

## Beschreibung

Es sind Stallanlagen für Milchkühe bekannt, die Melkkarusselle als Melkanlagen enthalten. Derartige Melkkarusselle dienen dazu, die Kühe während des Melkens zu fahren. Dabei werden die Melktiere bzw. Kühe zu einem vorgegebenen Einstiegspunkt hingetrieben und von einem vorbestimmten Ausstiegspunkt nach dem Melken weggetrieben. In einer derartigen Anlage, d.h. in einem solchen Raumsystem können bestimmte Liege- bzw. Ruheflächen nur entlang eines relativ langen Weges an anderen Liege- bzw. Ruheboxen vorbei vom Melkkarussell aus erreicht werden. Dieser sog. Triftweg zum Melken hin und vom Melken weg erfordert nicht nur einen entsprechenden Zeitaufwand sondern er kann auch durch den sich ergebenden Streß die Melkigkeit der Milchkühe beeinträchtigen. Die quasi punktförmige Schnittstelle zwischen den Liegeflächen bzw. - boxen und einem solchen bekannten Melkkarussell macht eine rotierende Plattform notwendig, auf welcher die Milchkühe während des Melkens bewegt werden. Diese Rotation der drehenden Plattform erfordert wegen der Größe und insbes. wegen des Gewichtes der Tiere und wegen der chemisch aggressiven Umgebung im Stall aufwendige und komplexe Maschinenanlagen und -konstruktionen, wobei ein Verschleiß derselben kaum zu vermeiden ist. Daraus resultieren jedoch unerwünschte Betriebsstörungen.

Der Erfindung liegt die Aufgabe zugrunde, eine Stallanlage für Milchkühe zu schaffen, welche bei einem relativ einfachen Aufbau die oben genannten Mängel vermeidet.

Diese Aufgabe wird erfindungsgemäß durch die Merkmale des Anspruchs 1 gelöst. Bevorzugte Aus- und Weiterbildungen der erfindungsgemäßen Stallanlage für Milchkühe sind in den Unteransprüchen gekennzeichnet.

Die erfindungsgemäße Stallanlage weist einen Grundriß mit zwei oder mehr Arbeitsbereichen auf, die konzentrisch angeordnet sind. Durch eine solche Ausbildung ist es in vorteilhafter Weise möglich, die Funktionsabläufe in den Arbeitsbereichen auf den Kreis- bzw. Kreisringgeometrien in daran angepaßten zeitlichen Zyklen geeignet zu organisieren. Dabei können zwei oder mehr als zwei Funktionsabläufe synchronisiert werden und/oder identische Werkzeuge und Handhabungsgeräte mehrfach synergetisch ausnutzen. Desgleichen können die genannten Funktionsabläufe Aufgaben der Versorgung der Milchkühe wie Melken, Füttern, Ruheflächen anbieten, und der Entsorgung wie Entmisten abwickeln. Das Futter kann auf einer schwimmenden Kreisringrinne, d.h. auf einem drehbaren Ringkörper transportiert und vorgelegt werden. Dieser Ringkörper kann aus Beton gegossen und in einem Ringkanal schwimmend angeordnet sein.

Das eine Kreisfläche bildende Zentrum der erfindungsgemäßen Stallanlage bestimmt die Melkfläche, d.h. den Melkstand. Die Bewegung bzw. der Verkehr der Milchkühe von dem und zum Melkstand erfolgt in vorteilhafter Weise in radialer Stallanlage vorgesehen sein kann, reduziert in vorteilhafter Weise die Gesamtlänge der Kanäle.

Die vorzugsweise eine Portalstruktur aufweisende Auslegereinrichtung ist zweckmäßigerweise im Zentrum der Stallanlage um einen zentralen Pfeiler drehbar. Die Auslegereinrichtung kann hierbei vom zentralen Pfeiler aus angetrieben werden. Sie ist in vorteilhafter Weise mehrfach nutzbar und kann die unterschiedlichsten Werkzeuge tragen, wie sie bspw. zum Füttern, zum Entmisten oder zum Treiben der Tiere, für das pünktliche Betreten und Verlassen des Melkstandes etc. erforderlich sind.

Während bekanntermaßen die Stallanlagen eine lange Giebellinie besitzen, welche eine besonders kosten- und funktionskritische Zone bildet, weist die erfindungsgemäße Stallanlage anstelle einer solchen langen Giebellinie eine konzentrierte Kreisfläche bspw. eine Kegel- oder Kegelmantelfläche um den entsprechenden Mittelpunkt auf.

Weitere Einzelheiten, Merkmale und Vorteile ergeben sich aus der nachfolgenden Beschreibung eines in der Zeichnung schematisch dargestellten Ausführungsbeispieles der erfindungsgemäßen Stallanlage. Es zeigen:
- Fig. 1: einen Grundriß der Stallanlage, wobei auf die Darstellung der Dachkonstruktion verzichtet worden ist, und
- Fig. 2: schematisch eine Seitenansicht der Stallanlage gemäß Fig. 1, wobei außerdem auch die Dachkonstruktion angedeutet ist.

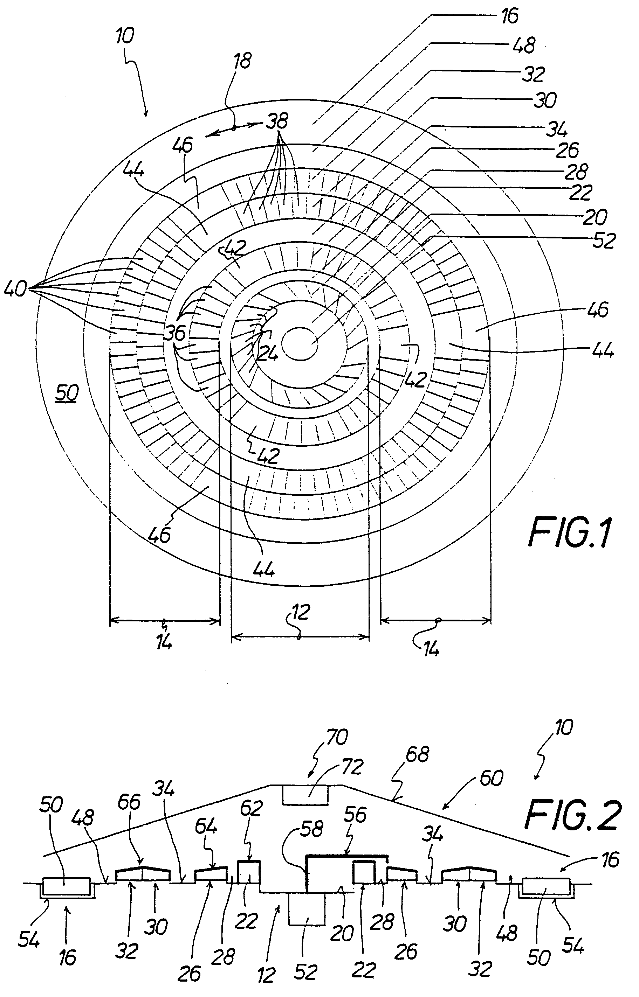

Fig. 1 zeigt in einer Ansicht von oben eine Ausbildung der Stallanlage 10 mit einem zentralen, ortsfest vorgesehenen Melkplatz, der durch den mit der Bezugsziffer 12 versehenen Doppelpfeil verdeutlicht ist, mit einem den zentralen Melkplatz 12 konzentrisch umgebenden Kreisringbereich, der mit der Bezugsziffer 14 bezeichnet ist, und der mit ortsfest vorgesehenen Liegeboxen für Milchkühe versehen ist, und mit einer radial außerhalb des Liegeboxen-Kreisringbereiches 14 und zu diesem konzentrisch vorgesehenen, kreisringförmigen Futterausgabeeinrichtung 16, die in ihrer Umfangsrichtung beweglich ist, was durch den Pfeil 18 verdeutlicht ist.

Der zentrale Melkplatz 12 weist eine ortsfeste kreisrunde Melkfläche 20 sowie einen Kreisring-Melkbereich 22 auf, welcher die Melkfläche 20 konzentrisch umgibt. Der Kreisring-Melkbereich 22 ist mit Melkboxen 24 versehen, die infolge des vergleichsweise kleinen Durchmessers des Kreisring-Melkbereiches 22 gegen die Radialrichtung schräg orientiert sind. Die Melkboxen 24 sind in Gruppen angeordnet. Die Fig. 1 zeigt drei Gruppen von Melkboxen 24.

Der den zentralen Melkplatz 12 konzentrisch umgebende Liegeboxen-Kreisringbereich 14 weist einen einzelnen Liegeboxen-Ringbereich 26 auf, der vom Kreisring-Melkbereich 22 bzw. vom zentralen Melkplatz 12 durch einen konzentrischen ringförmigen Triftweg 28 beabstandet ist. Der Liegeboxen-Kreisringbereich 14 weist außerdem ein Paar zueinander konzentrisch eng benachbarte Liegeboxen-Ringbereiche 30 und 32 auf, wobei der innere Liegeboxen-Ringbereich 30 vom einzelnen Liegeboxen-Ringbereich 26 durch einen kreisringförmigen konzentrischen Laufgang 34 beabstandet ist. Der einzelne Liegeboxen-Ringbereich 26 ist mit Liegeboxen 36 versehen, die in Gruppen zusanmengefaßt sind. Die Fig. 1 zeigt drei Liegeboxen-Gruppen, wobei die Liegeboxen 36 in Radialrichtung orientiert sind. Die Liegeboxen-Gruppen der Liegeboxen 36 sind radial den Melkboxen 24 der Melkboxengruppen passend zugeordnet. Die Liegeboxen-Ringbereiche 30 und 32 sind mit Liegeboxen 38 bzw. 40 versehen, die wie die Liegeboxen 36 in Radialrichtung orientiert sind. Auch die Liegeboxen 38 und 40 sind jeweils in Liegeboxen-Gruppen angeordnet, wobei die zuletzt genannten Gruppen der Liegeboxen 38 und 40 in radialer Richtung den Gruppen von Liegeboxen 36 zugewandt sind, d.h. wie diese radial ausgerichtet sind. Dadurch ergeben sich für den Tierverkehr eine entsprechende Anzahl Ein- und Ausstiegsstellen 42, 44 und 46 und somit ein optimierter Tierverkehr, bei welchem der die Melkigkeit der Tiere beeinträchtigende Streß minimiert ist.

Die kreisringförmige Futterausgabeeinrichtung 16 ist vom kreisringförmigen Liegeboxen-Kreisringbereich 14 durch einen kreisringförmigen konzentrischen Laufgang 48 beabstandet. Die Futterausgabeeinrichtung 16 ist vorzugsweise als schwimmende Kreisringrinne 50 ausgebildet.

Im zentralen Melkplatz 12, d.h. im Zentrum der Melkfläche 20 ist eine Gülleentsorgungs- und Umwälzeinrichtung 52 vorgesehen.

Die Fig. 2 zeigt in einer Seitenansicht die Stallanlage 10 mit dem zentralen Melkplatz 12 mit der Melkfläche 20 und dem Kreisring-Melkbereich 22, an den sich radial außen der Laufgang 28 anschließt. Mit der Bezugsziffer 26 ist auch in Fig. 2 der einzelne Liegeboxen-Ringbereich bezeichnet, der durch den Laufgang 34 von dem Paar eng benachbarter und zueinander konzentrisch vorgesehener Liegeboxen-Ringbereiche 30 und 32 beabstandet ist. Vom Paar Liegeboxen-Ringbereiche 30 und 32 durch den Laufgang 48 beabstandet ist die Futterausgabeeinrichtung 16 mit ihrer in einer ringförmigen Wanne 54 schwimmenden Kreisringrinne 50 vorgesehen. Mit der Bezugsziffer 52 ist auch in Fig. 2 die Gülleentsorgungs- und -umwälzeinrichtung bezeichnet.

Im Zentrum der Stallanlage 10 ist eine Auslegereinrichtung 56 um einen zentralen Pfeiler 58 drehbar vorgesehen. Die Auslegereinrichtung 56 dient zur Anbringung und Handhabung verschiedener Werkzeuge bzw. Handhabungsgeräte, wie sie in der Stallanlage 10 zur Anwendung gelangen.

Mit der Bezugsziffer 60 ist eine nur sehr schematisch angedeutete Dachkonstruktion der Stallanlage 10 bezeichnet. Diese Dachkonstruktion 60 weist Teildachkonstruktionen 62, 64 und 66 für den jeweiligen Ringbereich 22, 26 bzw. 30, 32 sowie eine die Teildachkonstruktionen 62, 64 und 66 überdeckende Gesamtdachkonstruktion 68 auf. Die Gesamtdachkonstruktion 68 ist pyramidenartig oder pyramidenstumpfförmig ausgebildet und weist vorzugsweise eine regelmäßig polygonale Grundflächenstruktur auf. Im Spitzbereich 70 der Gesamtdachkonstruktion 68 ist eine Klima- und/oder Belüftungsanlage 72 vorgesehen.

## Patentansprüche

1. Stallanlage für Melkkühe,
**gekennzeichnet durch**
einen ortsfest vorgesehenen Melkplatz (12), der mehrere Ein- bzw. Ausstiegsstellen aufweist.

2. Stallanlage nach Anspruch 1,
**dadurch gekennzeichnet,**
daß der Melkplatz (12) kreisrund ausgebildet ist.

3. Stallanlage nach Anspruch 1 oder 2,
**gekennzeichnet durch**
ortsfest vorgesehene Liegeboxen (36, 38, 40), welche den Melkplatz (112) umgeben.

4. Stallanlage nach Anspruch 3,
**dadurch gekennzeichnet,**
daß die Liegeboxen (36, 38, 40) in einem Kreisringbereich (14) angeordnet sind, der mehrere Ein- und Ausstiegstellen aufweist.

5. Stallanlage nach Anspruch 3 und 4,
**dadurch gekennzeichnet,**
daß der Liegeboxen-Kreisringbereich (14) zum Melkplatz (12) konzentrisch angeordnet sind.

6. Stallanlagen nach Anspruch 1 oder 2,
**gekennzeichnet durch**
eine zum Melkplatz (12) konzentrisch angeordnete kreisrunde Futterausgabeeinrichtung (16).

7. Stallanlage nach Anspruch 6,
**dadurch gekennzeichnet,**
daß die Futterausgabeeinrichtung (16) ortsfest oder vorzugsweise in ihrer Umfangsrichtung beweglich vorgesehen ist.

8. Stallanlage nach einem der vorhergehenden Ansprüche,
**dadurch gekennzeichnet,**
daß der zentrale Melkplatz (12) eine ortsfeste kreisrunde Melkfläche (20) und einen die kreisrunde Melkfläche (20) konzentrisch umgebenden ortsfesten Kreisring-Melkbereich (22) mit Melkboxen (24) aufweist.

9. Stallanlage nach Anspruch 8,
**dadurch gekennzeichnet,**
daß die Melkboxen (24) des Kreisring-Melkbereiches (22) gegen die Radialrichtung schräg orientiert sind.

10. Stallanlage nach einem der vorhergehenden Ansprüche,
**dadurch gekennzeichnet,**
daß der Liegeboxen-Kreisringbereich (14) von dem zentralen Melkplatz (12) durch einen ringförmigen ortsfesten Triftweg (28) beabstandet ist.

11. Stallanlage nach einem der vorhergehenden Ansprüche,
**dadurch gekennzeichnet,**
daß die Liegeboxen (38, 40) in Radialrichtung orientiert sind.

12. Stallanlage nach Anspruch 6 und 7,
**dadurch gekennzeichnet,**
daß die kreisringförmige Futterausgabeeinrichtung (16) vom kreisringförmigen Liegeboxen-Kreisringbereich (14) durch einen kreisringförmigen ortsfesten konzentrischen Laufgang (48) beabstandet ist.

13. Stallanlage nach Anspruch 6,
**dadurch gekennzeichnet,**
daß die Futterausgabeeinrichtung (16) als schwimmende Kreisringrinne (50) ausgebildet ist.

14. Stallanlage nach einem der vorhergehenden Ansprüche,
**dadurch gekennzeichnet,**
daß der zentrale Melkplatz (12) mittig mit einer Gülleentsorgungs- und -umwälzeinrichtung (52) ausgebildet ist.

15. Stallanlage nach einem der vorhergehenden Ansprüche,
**dadurch gekennzeichnet,**
daß im Zentrum eine für verschiedene Werkzeuge und Handhabungsgeräte vorgesehene Auslegereinrichtung (56) drehbar gelagert ist.

16. Stallanlage nach einem der vorhergehenden Ansprüche,
**dadurch gekennzeichnet,**
daß sie eine Dachkonstruktion (60) aufweist.

17. Stallanlage nach Anspruch 16,
**dadurch gekennzeichnet,**
daß die Dachkonstruktion (60) pyramidenartig mit einer regelmäßig polygonalen Grundflächenstruktur ausgebildet ist.

18. Stallanlage nach Anspruch 16,
**dadurch gekennzeichnet,**
daß im Spitzenbereich (70) der pyramidenartigen Dachkonstruktion (60) eine Klima- und/oder Durchlüftungsanlage (72) vorgesehen ist.
